# EUROPÄISCHE PATENTSCHRIFT

(11) **EP 3 367 200 B1**
(45) Veröffentlichungstag und Bekanntmachung des Hinweises auf die Patenterteilung: **12.08.2020**
(21) Anmeldenummer: 18156417.0
(22) Anmeldetag: 13.02.2018
(51) Int. Cl.: G05D 1/02

(54) **VERFAHREN ZUM BETRIEB EINES SICH SELBSTTÄTIG FORTBEWEGENDEN ROBOTERS**
METHOD FOR OPERATING AN AUTOMATICALLY MOVING ROBOT
PROCÉDÉ DE FONCTIONNEMENT D'UN ROBOT EN MOUVEMENT DE MANIÈRE AUTOMATIQUE

(30) Priorität: 27.02.2017 DE 102017103986
(43) Veröffentlichungstag der Anmeldung: 29.08.2018
(73) Patentinhaber: Vorwerk & Co. Interholding GmbH, 42275 Wuppertal (DE)
(72) Erfinder: Hillen, Lorenz, 42287 Wuppertal (DE)
(74) Vertreter: Müller, Enno

(56) Entgegenhaltungen:
- WO-A1-2013/116887
- WO-A1-2016/096304

## Beschreibung

### Gebiet der Technik

Die Erfindung betrifft ein Verfahren zum Betrieb eines sich selbsttätig fortbewegenden Roboters, wobei eine Umgebungskarte einer Umgebung des Roboters anhand von innerhalb der Umgebung aufgenommenen Messdaten erstellt wird, wobei eine Eigenposition des Roboters innerhalb der Umgebung geschätzt wird, und wobei sich der Roboter anhand der Umgebungskarte und der bekannten Eigenposition innerhalb der Umgebung fortbewegt.

Des Weiteren betrifft die Erfindung ein Computerprogrammprodukt zur Installation auf einer Recheneinrichtung eines sich selbsttätig fortbewegenden Roboters.

### Stand der Technik

Sich selbsttätig fortbewegende Roboter und Verfahren zu deren Betrieb sind im Stand der Technik bekannt. Berechnungen zur Erstellung einer Umgebungskarte erfolgen üblicherweise mittels einer eigenen Recheneinrichtung des Roboters und werden in einem lokalen Speicher des Roboters hinterlegt.

Die WO 2016/096304 A1 betrifft ein Verfahren zur Kartierung einer Bearbeitungsfläche für ein autonomes Roboterfahrzeug, wobei das Roboterfahrzeug zu einer Basisstation oder an einen Ausgangsstandort zurückkehrt, wenn eine Bodenbearbeitungsfahrt beendet ist. Bei Erreichen der Basisstation kann die erstellte Karte gelöscht oder in einem Speicher des Roboterfahrzeugs gespeichert werden, so dass die Karte als Grundlage weiterer Bearbeitungsfahrten des Roboters genutzt werden kann.

Die Veröffentlichung WO 2013/116887 A1 betrifft einen mobilen selbstfahrenden Roboter zum autonomen Ausführen von Tätigkeiten, welcher eine neu aufgebaute, temporäre Umgebungskarte mit einer permanenten Lokalisierungskärte abgleicht, um mögliche Unterschiede zu aktualisieren. Ein nicht mehr aktueller Kartenteilbereich wird durch geänderte Umgebungsteilbereiche überschrieben. Die nicht mehr aktuellen Kartenteilbereiche werden gelöscht.

Die Veröffentlichungen DE 10 2011 000536 A1 und DE 10 2008 014 912 A1 zeigen Verfahren gemäß dem Oberbegriff der Ansprüche 1 und 2 bspw. im Zusammenhang mit selbsttätig verfahrbaren Saug- und/ oder Reinigungsrobotern zur Abreinigung von Fußböden. Darüber hinaus können diese Verfahren jedoch auch Anwendung bei selbsttätig verfahrbaren Transportrobotern, Rasenmährobotern oder dergleichen finden. Die Roboter sind bevorzugt mit Abstandssensoren ausgestattet, welche Abstände zu Hindernissen messen. Aus den gemessenen Abstandsdaten wird eine Umgebungskarte erstellt, anhand welcher eine Fortbewegungsroute geplant werden kann, die eine Kollision mit Hindernissen vermeidet. Die Abstandssensoren arbeiten bevorzugt berührungslos, bspw. mit Hilfe von Licht- und/oder Ultraschall. Es ist des Weiteren bekannt, den Roboter mit Mitteln zur Rundum-Abstandsmessung zu versehen, bspw. in Form eines optischen Triangulationssystems, welches auf einer um eine Vertikalachse rotierenden Plattform oder dergleichen angeordnet ist. Die erfassten Abstandsdaten werden mittels eines On-Board-Computers des Roboters zu einer Umgebungskarte verarbeitet und in einem lokalen Speicher des Roboters gespeichert, sodass im Zuge eines Arbeitsbetriebs auf diese Umgebungskarte zum Zwecke der Orientierung zurückgegriffen werden kann.

Die Speicherung der Umgebungskarte innerhalb des lokalen Speichers des Roboters hat den Nachteil, dass aufgrund der begrenzten Speicherkapazität nur eine begrenzte Anzahl von Umgebungskarten bzw. nur eine Umgebungskarte einer bestimmten Größe gespeichert werden kann. Der begrenzte Speicherumfang reduziert somit die Reichweite des Roboters innerhalb der Umgebung, da dieser nur solche Umgebungsteilbereiche befährt, welche auch innerhalb in der Umgebungskarten verzeichnet sind.

### Zusammenfassung der Erfindung

Ausgehend von dem vorgenannten Stand der Technik ist es daher Aufgabe der Erfindung, die Reichweite des Roboters innerhalb der Umgebung zu vergrößern.

Zur Lösung der vorgenannten Aufgabe schlägt die Erfindung vor, dass eine für eine Navigation des Roboters derzeit nicht benötigte Umgebungskarte erkannt und an eine externe Speichereinrichtung übermittelt wird. Des Weiteren wird alternativ oder zusätzlich vorgeschlagen, dass ein für eine Navigation des Roboters derzeit nicht benötigter Kartenteilbereich der Umgebungskarte erkannt, aus der Umgebungskarte extrahiert und an eine externe Speichereinrichtung übermittelt wird.

Erfindungsgemäß werden aktuell nicht genutzte Umgebungskarten und/oder Kartenteilbereiche als nicht genutzte Karten bzw. Teilbereiche identifiziert und in eine externe Speichereinrichtung ausgelagert. Die dem Roboter insgesamt zur Verfügung stehenden Umgebungskarten bzw. Kartenteilbereiche befinden sich somit zum Teil in einem lokalen Speicher des Roboters und zum Teil in einer externen Speichereinrichtung. Dadurch kann der Umfang des in dem Roboter bzw. auf der externen Speichereinrichtung gespeicherten Kartenmaterials je nach der aktuellen Navigationsaufgabe des Roboters variiert werden. Eine Navigations- und Selbstlokalisierungseinrichtung des Roboters erkennt anhand von Zugriffsaktivitäten, welche Umgebungskarten bzw. welche Kartenteilbereiche einer Umgebungskarte aktuell für die Navigation des Roboters, insbesondere für eine Navigation entlang einer geplanten Fortbewegungsroute, nicht benötigt werden, sodass diese auf die externe Speichereinrichtung ausgelagert werden können. Des Weiteren kann eine Benötigung bzw. Nicht-Benötigung auch anhand der aktuellen Position des Roboters in der Umgebung, bzw. damit auch in der Umgebungskarte, erkannt werden. Die Speicherkapazität der externen Speichereinrichtung ist vorteilhaft flexibel anpassbar, sodass für bspw. kleine Wohnräume ein geringerer Speicheranteil der externen Speichereinrichtung belegt wird als für große Wohnräume, ganze Etagen eines Hauses oder dergleichen. Der lokale Speicher des Roboters, welcher üblicherweise fest in dem Roboter verbaut ist, kann entsprechend reduziert werden und durch kostengünstigen externen Speicher ersetzt werden. Der Roboter selbst kann mit einem gegenüber dem Stand der Technik relativ kleinen lokalen Speicher ausgestattet werden, welcher für Nutzer mit relativ kleinen Wohnräumen ausreichend ist, um die erstellten Umgebungskarten der Wohnräume zu speichern. Wird der Roboter hingegen in großen Wohnräumen, mehreren Stockwerken oder gar mehreren Häusern eingesetzt, erfolgt vorteilhaft eine Auslagerung einer Mehrzahl von Umgebungskarten und/oder zumindest eines Kartenteilbereiches einer Umgebungskarte auf die externe Speichereinrichtung, von wo diese nach Bedarf von dem Roboter wieder abgerufen werden können, bspw. wenn der Roboter in einen Teilbereich der Umgebung fährt, der eine andere in der externen Speichereinrichtung gespeicherte Umgebungskarte bzw. einen anderen dort gespeicherten Kartenteilbereich betrifft. Die Berechnungen zur Navigation des Roboters werden mittels eines lokalen Rechners des Roboters ausgeführt, nämlich anhand des aktuell in dem Roboter gespeicherten Kartenmaterials. Alle Umgebungskarten und Kartenteilbereiche, welche für die Navigationsberechnungen derzeit nicht benötigt werden, sind hindessen auf die externe Speichereinrichtung ausgelagert.

Zur Durchführung der Navigationsberechnungen ist der Roboter mit mindestens einem Prozessor sowie einem lokalen Speicher ausgestattet, welcher in typischer Weise einen flüchtigen Speicher, z.B. einen Arbeitsspeicher, aufweist. Grundsätzlich kann der lokale Speicher jedoch auch zusätzlich einen nicht flüchtigen Speicher, z.B. einen Flash-Speicher, aufweisen. Darüber hinaus weist der Roboter verschiedene Sensoren, Antriebe, Reinigungseinrichtungen oder dergleichen auf. Eine aktuell benötigte Umgebungskarte bzw. ein aktuell benötigter Kartenteilbereich wird gemäß der Erfindung vorzugsweise in dem flüchtigen Speicher des Roboters gehalten, ggf. auch in einem nicht flüchtigen Speicher des Roboters, bspw. um eine Persistenz der Umgebungskarten zwischen verschiedenen Arbeitsläufen des Roboters zu erhalten oder zur Zwischenspeicherung. Auf die in dem Roboter gespeicherte Umgebungskarte bzw. den in dem Roboter gespeicherten Kartenteilbereich werden übliche Kartierungs- und Selbstlokalisierungsverfahren angewendet, bspw. bekannte SLAM-Verfahren. Die Größe des Umgebungsanteils, die der Roboter erfassen und kartieren kann, ist nach der Erfindung zum einen limitiert durch die räumliche Auflösung der Umgebungskarte, d.h. bspw. die Kästchengröße einer Gitterkarte, und zum anderen durch den zur Verfügung stehenden Speicherplatz in sowohl dem lokalen Speicher des Roboters, als auch auf der externen Speichereinrichtung. Sofern der Roboter bspw. in einer Umgebung arbeitet, die kleiner ist als eine durch den lokalen Speicher vorgegebene maximal bearbeitbare Umgebung, bleibt ein Teilbereich des lokalen Speichers ungenutzt. Sofern der Roboter in einer demgegenüber größeren Umgebung arbeitet, können nicht alle Kartenteilbereiche der Umgebungskarten bzw. nicht alle von mehreren Umgebungskarten innerhalb des lokalen Speichers des Roboters gespeichert werden, sondern werden an die externe Speichereinrichtung übermittelt. Dabei kann vorgesehen sein, dass der Roboter neben dem flüchtigen Speicher noch einen gegenüber der externen Speichereinrichtung relativ kleinen, nicht flüchtigen Speicher aufweist. Alternativ kann der nicht flüchtige Speicher vollständig in die externe Speichereinrichtung ausgelagert sein, sodass der Roboter selbst nur einen flüchtigen Speicher aufweist.

Üblicherweise arbeiten sich selbsttätig fortbewegende Roboter in Umgebungen, die sich leicht in Teilbereiche unterteilen lassen. Solche Teilbereiche können bspw. einzelne Räume einer Wohnung sein, wie Küche, Esszimmer, Schlafzimmer und dergleichen. Des Weiteren können auch große, durchgängige Räume, welche unterschiedlichen Wohnzwecken dienen, in Teilbereiche unterteilt werden, bspw. in einen Wohnbereich, Essbereich, einen Küchenbereich und dergleichen. Somit können auch nur Teilbereiche von Räumen in einer eigenen Umgebungskarte kartiert werden. Zusätzlich werden die Übergangspunkte zwischen diesen Umgebungskarten gespeichert, sodass die räumlichen Beziehungen bekannt sind. Alternativ ist es auch möglich, eine globale Umgebungskarte für die gesamte Arbeitsumgebung zu erstellen.

Es wird vorgeschlagen, dass eine für eine Navigation derzeit benötigte Umgebungskarte und/oder ein derzeit für eine Navigation des Roboters benötigter Kartenteilbereich in einem lokalen Speicher des Roboters gespeichert wird. Der lokale Speicher ist vorzugsweise ein flüchtiger Speicher, wie bspw. ein Arbeitsspeicher, in welchem auch die Navigationsberechnungen durchgeführt werden. Beim Übergang in einen anderen Bereich der Umgebung, welcher einen anderen Kartenteilbereich oder eine andere Umgebungskarte betrifft, wird dann der aktuell in dem lokalen Speicher des Roboters gespeicherte aktive Kartenteilbereich aus dem lokalen Speicher des Roboters in die externe Speichereinrichtung verschoben und ein neuer, aktuell benötigter Kartenteilbereich bzw. eine aktuell benötigte Umgebungskarte in den lokalen Speicher des Roboters übertragen. Dazu fordert der Roboter die benötigte Umgebungskarte bzw. den benötigten Kartenteilbereich von der externen Speichereinrichtung an. Dies kann durch Herunterladen aus dem Speicher erfolgen. Eine Kommunikationsverbindung zum Übertragen der Umgebungskarten bzw. Kartenteilbereiche zwischen dem Speicher des Roboters und dem Speicher der externen Speichereinrichtung kann eine Netzwerkschnittstelle, wie z.B. ein WLAN-Modul, beinhalten. Der Speicher der externen Speichereinrichtung ist vorzugsweise nach der Art einer Datenbank ausgestaltet.

Es wird vorgeschlagen, dass die nicht benötigte Umgebungskarte und/oder der nicht benötigte Kartenteilbereich an einen externen lokalen Server und/oder einen Internetserver übermittelt und auf diesem gespeichert wird. Bei dem externen lokalen Server kann es sich bspw. um einen eigenen Server des Nutzers des Roboters handeln. Beispielsweise. kann der lokale Server ein PC, ein Laptop, ein Tablet-Computer, ein Mobiltelefon oder dergleichen sein. Dieser Server befindet sich bspw. in demselben Heimnetzwerk wie auch der Roboter selbst. Der Roboter kann bspw. mittels eines WLAN-Moduls mit dem Server kommunizieren. Alternativ kann die externe Speichereinrichtung ein Internetserver sein oder zumindest ein bestimmter Speicherbereich eines Internetservers. Vorzugsweise stellt der Internetserver eine sogenannte Cloud bereit. Ein solcher Cloud-Speicher ist vorzugsweise bezogen auf seine Speicherkapazität variabel, sodass bspw. nur eine solche Speicherkapazität kostenpflichtig ist, die auch tatsächlich benutzt wird. Dadurch kann der Roboter besonders kostengünstig mit einem nur kleinen lokalen Speicher ausgestattet werden, wobei die Nutzer dann selbst, nach Bedarf, über die Größe des Speichers der externen Speichereinrichtung entscheiden. Vorzugsweise kann der Internetserver bspw. auch ein Server des Herstellers des Roboters sein.

Vorzugsweise übermitteln mehrere Roboter Umgebungskarten und/oder Kartenteilbereiche an die externe Speichereinrichtung, wobei ein erster Roboter auf eine von einem zweiten Roboter übermittelte Umgebungskarte und/oder einen Kartenteilbereich zugreifen kann. Gemäß dieser Ausgestaltung greifen mehrere Roboter auf eine gemeinsame Kartendatenbank zu, wobei jeder oder zumindest mehrere der Roboter Umgebungskarten und/oder Kartenteilbereiche an die externe Speichereinrichtung übermitteln und ein oder mehrere andere Roboter auf diese Umgebungskarten und/oder Kartenteilbereiche zugreifen. Bei der Mehrzahl von Robotern kann es sich vorzugsweise um in einer gemeinsamen Umgebung parallel arbeitende Roboter handeln, die einen Zugriff auf gespeicherte Umgebungskarten und Kartenteilbereiche eines oder mehrerer anderer Roboter haben. In der externen Speichereinrichtung werden die Umgebungskarten der Roboter zusammengeführt, wobei Roboter, die in großen Umgebungen arbeiten, bspw. auf der externen Speichereinrichtung einen relativ großen Speicherplatz belegen, und wobei Roboter, die in kleinen Umgebungen arbeiten, entsprechend geringeren Speicherplatz belegen. Jeder Roboter kann dann beim Verlassen eines Umgebungsteilbereiches die zugehörige Umgebungskarte bzw. den zugehörigen Kartenteilbereich auf der externen Speichereinrichtung ablegen und sich eine anschließend benötigte Umgebungskarte bzw. einen anschließend benötigten Kartenteilbereich von dort nachladen. Da der Speicher auf bspw. Internetservern nahezu unbeschränkt vorhanden ist, können beliebig viele Roboter beliebig große Umgebungen reinigen, ohne dass in der Praxis eine vollständige Belegung des Speichers eintritt. Die gegenseitige Zurverfügungstellung von Umgebungskarten bzw. Kartenteilbereichen hat zudem den Vorteil, dass nicht jeder beteiligte Roboter selbst eine Kartierung seiner Umgebung vornehmen muss.

Es wird vorgeschlagen, dass der Roboter bei einer Änderung der Eigenposition, welche eine zuvor nicht benötigte Umgebungskarte und/oder einen zuvor nicht benötigten Kartenteilbereich einer Umgebungskarte betrifft, diese Umgebungskarte und/oder diesen Kartenteilbereich von der externen Speichereinrichtung empfängt. Wie zuvor erläutert findet somit ein Austausch von Umgebungskarten bzw. Kartenteilbereichen in dem lokalen Speicher des Roboters statt. Somit kommt es nicht zu einer Erhöhung des belegten Speicherplatzes innerhalb des Roboters.

Zudem wird vorgeschlagen, dass eine neu erstellte Umgebungskarte und/oder ein neu erstellter Kartenteilbereich während der Erstellung innerhalb eines lokalen Speichers des Roboters gespeichert wird. Beim Betreten eines Umgebungsbereiches, welcher bisher noch nicht kartiert wurde, durch den Roboter, wird die bisher verwendete Umgebungskarte bzw. der bisher verwendete Kartenteilbereich an die externe Speichereinrichtung übermittelt und eine neue Umgebungskarte bzw. ein neuer Kartenteilbereich innerhalb des lokalen Speichers des Roboters aufgebaut.

Im Falle des sogenannten "Kidnapped Robot"-Problems, bei welchem der Roboter an einer unbekannten Stelle der Umgebung ausgesetzt wird und sich lokalisieren muss, bzw. feststellen muss, dass er in einem unbekannten Teilbereich der Umgebung abgesetzt wurde, lädt der Roboter nacheinander jeden bekannten Kartenteilbereich bzw. jede bekannte Umgebungskarte in seinen lokalen Speicher und versucht sich darin zu orientieren. Dabei verbleibt eine Umgebungskarte bzw. ein Kartenteilbereich in dem lokalen Speicher, welche bzw. welcher mit den aktuell gemessenen Messdaten am besten korrespondiert. Dies erfolgt bspw. mittels eines bekannten Scan-Matching-Verfahrens. Sofern die Konfidenz in die Selbstlokalisierung in allen Kartensegmenten sehr gering ist, d.h. nur eine schlechte Übereinstimmung zwischen den Messdaten des Roboters und den Umgebungskarten bzw. Kartenteilbereichen besteht, ist davon auszugehen, dass der Roboter in einem unbekannten Bereich einer Umgebung abgestellt wurde. Dann erfolgt ein Aufbau einer neuen Umgebungskarte bzw. eines neuen Kartenteilbereichs.

Des Weiteren wird vorgeschlagen, dass in dem Roboter und/oder der externen Speichereinrichtung gespeicherte Umgebungskarten und/oder Kartenteilbereiche auf einem Display dargestellt werden. Gemäß dieser Ausgestaltung kann bspw. der Roboter ein Display aufweisen, auf welchem die in seinem lokalen Speicher aktuell gespeicherte Umgebungskarte bzw. ein dort gespeicherter Kartenteilbereich für einen Nutzer angezeigt wird. Des Weiteren könnten dort wahlweise auch diejenigen Umgebungskarten bzw. Kartenteilbereiche dargestellt werden, welche nicht in dem Roboter selbst, sondern in der externen Speichereinrichtung gespeichert sind. Vorzugsweise kann der Nutzer auch wählen, bspw. mittels eines auf einem Touchscreen dargestellten Wahlschalters, ob der Speicherinhalt des Roboters oder der externen Speichereinrichtung angezeigt werden soll. Des Weiteren kann der Roboter auch in Verbindung mit einem externen Gerät verwendet werden, welches ein Display aufweist, bspw. in Verbindung mit einem Smartphone, einem Tablet-Computer, einem Laptop oder dergleichen. Dieses externe Gerät steht in Kommunikationsverbindung mit dem Roboter, sodass dieses auf den lokalen Speicher des Roboters und vorteilhaft auch auf den Speicher der externen Speichereinrichtung zugreifen und dessen Inhalt anzeigen kann.

Schließlich wird vorgeschlagen, dass der Roboter eine Umgebungskarte und/oder ein Kartenteilbereich, welche eine geplante Fortbewegungsroute des Roboters zumindest teilweise beinhalten, zeitlich im Voraus von der externen Speichereinrichtung empfängt. Durch diese Ausgestaltung kann eine zeitlich in Kürze benötigte Umgebungskarte bzw. ein Kartenteilbereich vorauseilend in dem lokalen Speicher des Roboters hinterlegt werden. Dies kann bspw. zur Sicherheit erfolgen, falls der Roboter eine Kommunikationsverbindung zu der externen Speichereinrichtung verliert, oder um einen Fortgang des Roboters entlang der Fortbewegungsroute auch während des Austauschs der Umgebungskarte bzw. des Kartenteilbereichs sicherzustellen. Insbesondere ist die vorzeitige Speicherung einer Umgebungskarte bzw. eines Kartenteilbereichs dann vorteilhaft, wenn sich eine bisher benötigte Umgebungskarte bzw. ein bisher benötigter Kartenteilbereich und eine anschließende Umgebungskarte bzw. ein sich anschließender Kartenteilbereich zumindest teilweise überlappen. Die zeitlich vorauseilende Speicherung einer demnächst benötigten Umgebungskarte bzw. eines demnächst benötigten Kartenteilbereichs kann vorteilhaft in einem nicht flüchtigen Speicher des Roboters erfolgen, aus welchem sich dann wiederum der flüchtige Speicher des Roboters bedient.

Des Weiteren kann auch vorgesehen sein, dass nicht nur Speicherkapazität, sondern auch Rechenleistung von dem Roboter auf eine externe Einrichtung, vorzugsweise auf einen Internetserver, verlagert wird. Dadurch ist es möglich, auf dem Roboter eine Recheneinrichtung mit nur geringer Rechenleistung vorzusehen. Beispielsweise könnte der Roboter einen Mikrokontroller aufweisen.

Neben dem zuvor beschriebenen Verfahren zum Betrieb eines sich selbsttätig fortbewegenden Roboters wird mit der Erfindung des Weiteren ein Computerprogrammprodukt zur Installation auf einer Recheneinrichtung eines sich selbsttätig fortbewegenden Roboters vorgeschlagen, wobei das Computerprogrammprodukt ausgebildet ist, den Roboter zu veranlassen, ein zuvor beschriebenes Verfahren auszuführen. Insbesondere wird vorgeschlagen, dass das Computerprogrammprodukt ausgebildet ist, den Roboter zu veranlassen, eine für eine Navigation des Roboters derzeit nicht benötigte Umgebungskarte und/oder einen derzeit nicht benötigten Kartenteilbereich einer Umgebungskarte zu erkennen und an eine externe Speichereinrichtung zu übermitteln. Des Weiteren kann das Computerprogrammprodukt auch weitere Verfahrensschritte veranlassen, bspw. die Speicherung und Anforderung benötigter Umgebungskarten bzw. benötigter Kartenteilbereiche von der externen Speichereinrichtung, die Neuerstellung einer Umgebungskarte bzw. die Neuerstellung eines Kartenteilbereiches innerhalb des lokalen Speichers des Roboters, die Anzeige einer in dem Roboter und/oder der externen Speichereinrichtung gespeicherten Umgebungskarte und/oder eines entsprechenden Kartenteilbereiches auf einem Display des Roboters oder eines externen Gerätes. Des Weiteren gelten alle zuvor in Bezug auf das Verfahren beschriebenen Merkmale und Vorteile auch entsprechend für das Computerprogrammprodukt.

### Kurze Beschreibung der Zeichnungen

Im Folgenden wird die Erfindung anhand von Ausführungsbeispielen näher erläutert. Es zeigen:
- Fig. 1: einen Roboter innerhalb einer Umgebung,
- Fig. 2: ein System aus einer externen Speichereinrichtung und mehreren damit in Kommunikationsverbindung stehenden Robotern,
- Fig. 3: einen Roboter mit einem lokalen Speicher und einem darin gespeicherten Kartenteilbereich,
- Fig. 4: eine externe Speichereinrichtung mit einem darin gespeicherten Kartenteilbereich.

### Beschreibung der Ausführungsformen

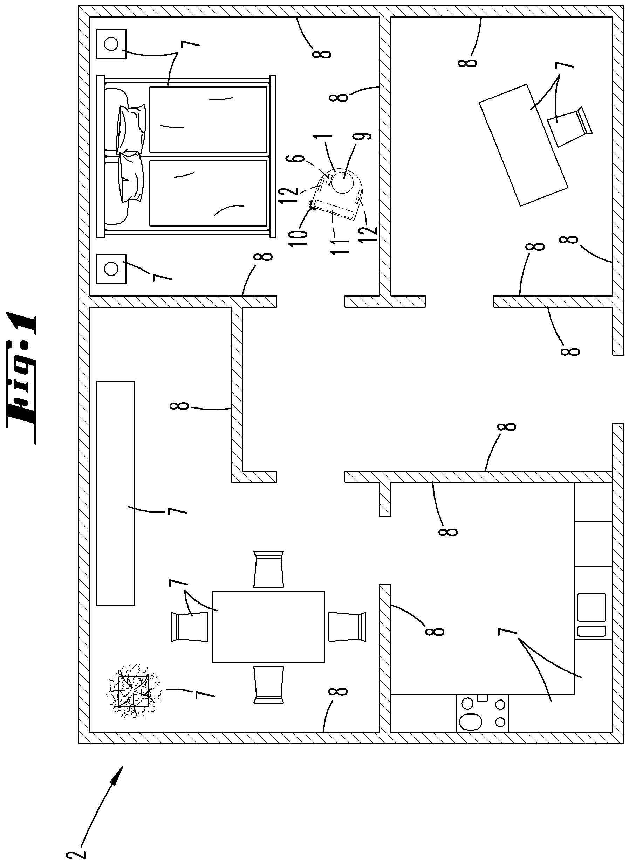

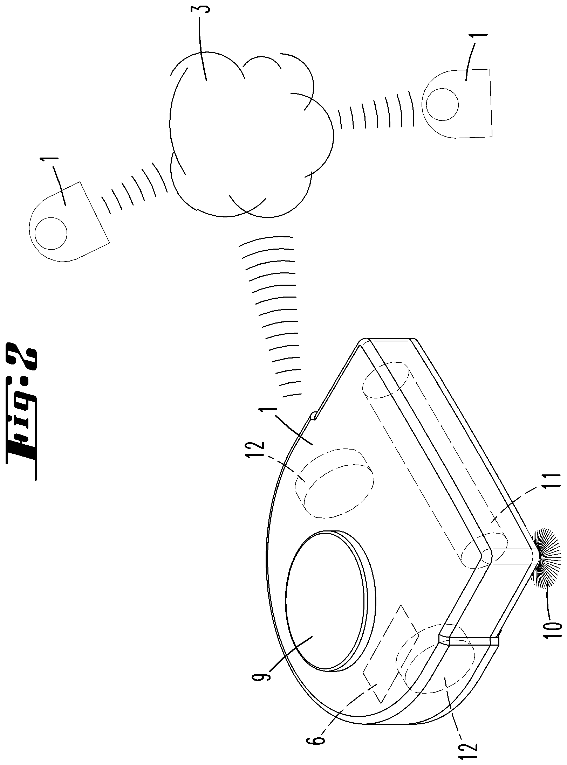

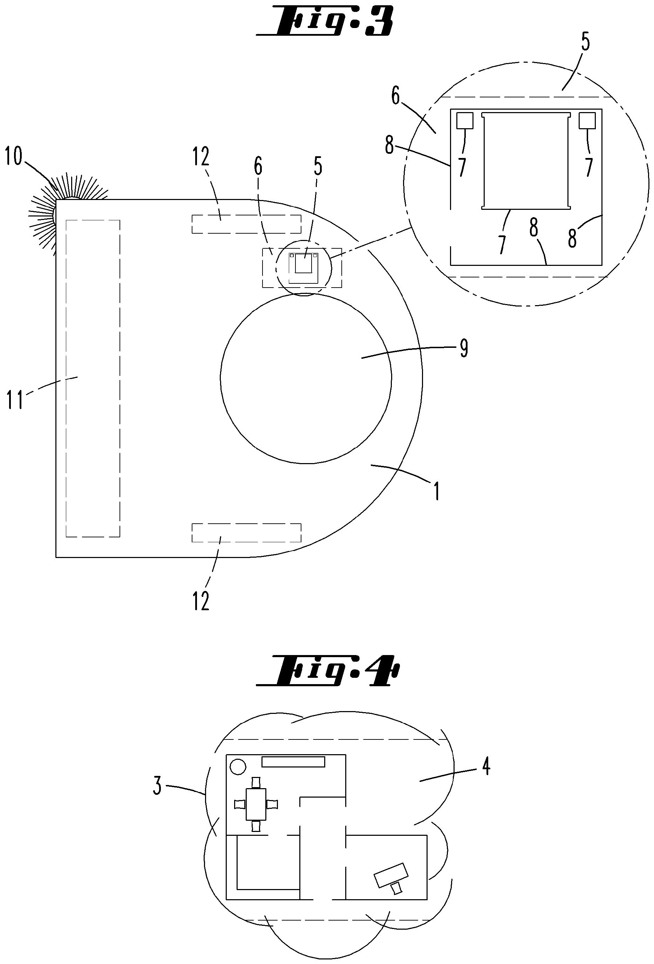

Figur 1 zeigt eine Umgebung 2, in welcher sich ein Roboter 1 bewegt. Die Umgebung 2 ist hier eine Wohnung mit einer Mehrzahl von Räumen, die Hindernisse 7 und Wände 8 aufweisen. Die Hindernisse 7 sind bspw. Möbelstücke oder sonstige Einrichtungsgegenstände, hier Schränke, Tische, Stühle, eine Küchenzeile, Blumen, ein Bett, Nachttische, ein Schreibtisch und dergleichen. Der Roboter, welcher vergrößert in den Figuren 2 und 3 dargestellt ist, ist hier bspw. als Saugroboter ausgebildet. Er verfügt über motorisch angetriebene Räder 12, mit deren Hilfe er sich innerhalb der Umgebung 2 fortbewegen kann. Des Weiteren weist der Roboter 1 Reinigungselemente 10, 11 auf, nämlich eine Seitenbürste (Reinigungselement 10) und eine Borstenwalze (Reinigungselement 11), welche der Einwirkung auf eine zu reinigende Fläche dienen. Weiter weist der Roboter 1 im Bereich des Reinigungselementes 11 eine nicht weiter dargestellte Saugmundöffnung auf, über welche mittels einer Motor-Gebläse-Einheit mit Sauggut beaufschlagte Luft in den Roboter 1 eingesaugt werden kann. Für die Elektroversorgung der einzelnen Elektrokomponenten des Roboters 1, wie für den Antrieb der Räder 12 und der Reinigungselemente 10, 11 und darüber hinaus weiter vorgesehene Elektronik, weist der Roboter 1 einen nicht dargestellten, wiederaufladbaren Akkumulator auf. Der Roboter 1 ist des Weiteren mit einer Abstandsmesseinrichtung 9 ausgestattet, welche hier bspw. eine Triangulationsmesseinrichtung aufweist. Die Abstandsmesseinrichtung 9 misst Abstände zu Hindernissen 7 und Wänden 8 innerhalb der Umgebung 2 des Roboters 1. Die Abstandsmesseinrichtung 9 weist im Einzelnen eine Laserdiode auf, deren emittierter Lichtstrahl über eine Umlenkeinrichtung aus einem Gehäuse des Roboters 1 herausgeführt und um eine in der gezeigten Orientierung des Roboters 1 senkrechte Drehachse rotierbar ist, insbesondere mit einem Messwinkel von 360 Grad. Dadurch ist eine Rundum-Abstandsmessung um den Roboter 1 möglich.

Mit Hilfe der Abstandsmesseinrichtung 9 kann die Umgebung 2 des Roboters 1 in einer bevorzugt horizontalen Ebene vermessen werden, d.h. in einer zu der zu reinigenden Fläche parallelen Ebene. Dadurch kann der Roboter 1 unter Vermeidung einer Kollision mit Hindernissen 7 und Wänden 8 in der Umgebung 2 verfahren. Die mittels der Abstandsmesseinrichtung 9 aufgenommenen Messdaten, welche Abstände zu Hindernissen 7 und/oder Wänden 8 in der Umgebung 2 darstellen, werden zur Erstellung einer Umgebungskarte der Umgebung 2 genutzt. Des Weiteren kann der Roboter 1 bspw. einen nicht dargestellten Odometrie-Sensor aufweisen, welcher eine von dem Roboter 1 zurückgelegte Wegstrecke misst. Des Weiteren ist es auch möglich, dass der Roboter 1 bspw. Kontaktsensoren oder dergleichen aufweist.

Der Roboter 1 verfügt des Weiteren über einen lokalen Speicher 6, welcher zur Speicherung einer Umgebungskarte oder eines Kartenteilbereiches 5 einer Umgebungskarte dient. Der lokale Speicher 6 ist hier bspw. ein flüchtiger Speicher, in welchem gleichzeitig auch Navigations- und Selbstlokalisierungsberechnungen des Roboters 1 durchgeführt werden.

Wie in Figur 2 dargestellt, befindet sich der Roboter 1 in Kommunikationsverbindung mit einer externen Speichereinrichtung 3, welche hier bspw. ein Cloud-Speicher ist. Mit dieser externen Speichereinrichtung 3 stehen ebenfalls weitere Roboter 1 in Kommunikationsverbindung.

Figur 3 zeigt im Einzelnen den Roboter 1 mit dem in dem lokalen Speicher 6 gespeicherten Kartenteilbereich 5.

Figur 4 zeigt schließlich die externe Speichereinrichtung 3 mit einem darin gespeicherten Kartenteilbereich 4.

Die Erfindung funktioniert nun bspw. so, dass jeder der in Figur 2 dargestellten Roboter 1, innerhalb der Umgebung 2 verfährt und dabei eine Reinigungsaufgabe oder eine andere Aufgabe ausführt. Bei den Aufgaben kann es sich allgemein um Bodenbearbeitungsaufgaben handeln, oder auch bspw. um eine reine Fortbewegung zum Transport von Gegenständen, Hilfsmitteln oder dergleichen. Jeder Roboter 1 erstellt eine Umgebungskarte oder einen Kartenteilbereich 4, 5 seiner Umgebung und speichert diese entweder in seinem lokalen Speicher 6 oder in der externen Speichereinrichtung 3 ab. Nachfolgend wird das Verfahren nur in Bezug auf den exemplarisch in Figur 3 dargestellten Roboter 1 beschrieben, wobei auch die anderen am Netzwerk beteiligten Roboter 1 (siehe Figur 2) entsprechend arbeiten können.

Der Roboter 1 erstellt wie zuvor erläutert eine Umgebungskarte der Umgebung 2 und schätzt seine Eigenposition innerhalb der Umgebung 2 durch einen Vergleich aktueller Messdaten mit in der Umgebungskarte gespeicherten Positionsdaten von Hindernissen 7 und/oder Wänden 8. Bei seiner Fortbewegung innerhalb der Umgebung 2 verfolgt der Roboter 1 vorzugsweise eine geplante Fortbewegungsroute. Dabei erstellt er stets neue Umgebungskarten oder neue Kartenteilbereiche 4, 5, welche bspw. einzelne Räume oder Teilbereiche der Räume der in Figur 1 dargestellten Umgebung 2 betreffen. Wenn der Roboter 1 bspw. einen Teilbereich der Umgebung 2, bspw. einen Raum, verlässt, und in einen anderen Umgebungsteilbereich, d.h. einen anderem Raum, hineinfährt, übermittelt er nicht mehr benötigte Umgebungskarten oder nicht mehr benötigte Kartenteilbereiche 4 an die externe Speichereinrichtung 3. Somit ist innerhalb des lokalen Speichers 6 des Roboters 1 nur noch ein solcher Kartenteilbereich 5 gespeichert, welcher einen Teilbereich der Umgebung 2 betrifft, innerhalb dessen sich der Roboter 1 derzeit befindet. Die aktuell nicht mehr benötigten Kartenteilbereiche 4 sind, wie in Figur 4 dargestellt, in der externen Speichereinrichtung 3 gespeichert, wo sie von anderen Robotern 1 oder auch zu einem späteren Zeitpunkt von dem Roboter 1 selbst heruntergeladen werden können. In dem lokalen Speicher 6 des Roboters 1 befindet sich nur noch ein eine relativ geringe Speicherkapazität beanspruchender Kartenteilbereich 5, welcher die aktuelle Eigenposition des Roboters 1 enthält. Sofern sich die Eigenposition des Roboters 1 derart ändert, dass diese nicht mehr in dem in dem lokalen Speicher 6 gespeicherten Kartenteilbereich 5 enthalten ist, übermittelt der Roboter 1 den Kartenteilbereich 5 an die externe Speichereinrichtung 3 und fordert im Gegenzug einen neuen Kartenteilbereich 4, 5 an, in welchem sich die Fortbewegungsroute des Roboters 1 fortsetzt. Dieser neue Kartenteilbereich 4, 5 kann bspw. ein Kartenteilbereich 4, 5 sein, welchen ein anderer Roboter 1 in der externen Speichereinrichtung 3 hinterlegt hat. Des Weiteren kann es jedoch auch ein Kartenteilbereich 4, 5 sein, den der Roboter 1 selbst zu einem früheren Zeitpunkt in der externen Speichereinrichtung 3 abgelegt hatte. Während der Fortbewegung des Roboters 1 wird der Nutzer des Roboters 1 bspw. zusätzlich mittels eines Displays über eine aktuell innerhalb des lokalen Speichers 6 des Roboters 1 gespeicherte Umgebungskarte informiert, oder alternativ oder zusätzlich auch über Umgebungskarten oder Kartenteilbereiche 4, 5, welche innerhalb der externen Speichereinrichtung 3 gespeichert sind.

Sofern der Roboter 1 einen Teilbereich der Umgebung 2 befährt, welcher bisher noch nicht kartografiert wurde, erstellt er mittels seiner Navigations- und Selbstlokalisierungseinrichtung eine neue Umgebungskarte bzw. einen neuen Kartenteilbereich 5 innerhalb seines lokalen Speichers 6. Sofern auch diese neu erstellte Umgebungskarte bzw. dieser Kartenteilbereich 5 nicht mehr von dem Roboter 1 benötigt wird, übermittelt er auch diese bzw. diesen an die externe Speichereinrichtung 3.

### Liste der Bezugszeichen

- 1: Roboter
- 2: Umgebung
- 3: Externe Speichereinrichtung
- 4: Kartenteilbereich
- 5: Kartenteilbereich
- 6: Lokaler Speicher
- 7: Hindernis
- 8: Wand
- 9: Abstandsmesseinrichtung
- 10: Reinigungselement
- 11: Reinigungselement
- 12: Rad

## Patentansprüche

1. Verfahren zum Betrieb eines sich selbsttätig fortbewegenden Roboters (1), wobei eine Umgebungskarte einer Umgebung (2) des Roboters (1) anhand von innerhalb der Umgebung (2) aufgenommenen Messdaten erstellt wird, wobei eine Eigenposition des Roboters (1) innerhalb der Umgebung (2) geschätzt wird, und wobei sich der Roboter (1) anhand der Umgebungskarte und der bekannten Eigenposition innerhalb der Umgebung (2) fortbewegt, **dadurch gekennzeichnet, dass** eine für eine Navigation des Roboters (1) derzeit nicht benötigte Umgebungskarte erkannt und an eine externe Speichereinrichtung (3) übermittelt wird.

2. Verfahren zum Betrieb eines sich selbsttätig fortbewegenden Roboters (1), wobei eine Umgebungskarte einer Umgebung (2) des Roboters (1) anhand von innerhalb der Umgebung (2) aufgenommenen Messdaten erstellt wird, wobei eine Eigenposition des Roboters (1) innerhalb der Umgebung (2) geschätzt wird, und wobei sich der Roboter (1) anhand der Umgebungskarte und der bekannten Eigenposition innerhalb der Umgebung (2) fortbewegt, **dadurch gekennzeichnet, dass** ein für eine Navigation des Roboters (1) derzeit nicht benötigter Kartenteilbereich (4) der Umgebungskarte erkannt, aus der Umgebungskarte extrahiert und an eine externe Speichereinrichtung (3) übermittelt wird.

3. Verfahren nach Anspruch 1 oder 2, **dadurch gekennzeichnet, dass** eine für eine Navigation derzeit benötigte Umgebungskarte und/oder ein derzeit für eine Navigation des Roboters (1) benötigter Kartenteilbereich (5) in einem lokalen Speicher (6) des Roboters (1) gespeichert wird.

4. Verfahren nach einem der vorhergehenden Ansprüche, **dadurch gekennzeichnet, dass** die nicht benötigte Umgebungskarte und/oder der nicht benötigte Kartenteilbereich (4) an einen externen lokalen Server und/oder einen Internetserver übermittelt und auf diesem gespeichert wird.

5. Verfahren nach einem der vorhergehenden Ansprüche, **dadurch gekennzeichnet, dass** mehrere Roboter (1) Umgebungskarten und/oder Kartenteilbereiche (4) an die externe Speichereinrichtung (3) übermitteln, wobei ein erster Roboter (1) auf eine von einem zweiten Roboter (1) übermittelte Umgebungskarte und/oder einen Kartenteilbereich (4) zugreifen kann.

6. Verfahren nach einem der vorhergehenden Ansprüche, **dadurch gekennzeichnet, dass** der Roboter (1) bei einer Änderung der Eigenposition, welche eine zuvor nicht benötigte Umgebungskarte und/oder einen zuvor nicht benötigten Kartenteilbereich (4) einer Umgebungskarte betrifft, diese Umgebungskarte und/oder diesen Kartenteilbereich (4) von der externen Speichereinrichtung (3) empfängt.

7. Verfahren nach einem der vorhergehenden Ansprüche, **dadurch gekennzeichnet, dass** eine neu erstellte Umgebungskarte und/oder ein neu erstellter Kartenteilbereich (5) während der Erstellung innerhalb eines lokalen Speichers (6) des Roboters (1) gespeichert wird.

8. Verfahren nach einem der vorhergehenden Ansprüche, **dadurch gekennzeichnet, dass** in dem Roboter (1) und/oder der externen Speichereinrichtung (3) gespeicherte Umgebungskarten und/oder Kartenteilbereiche (4, 5) auf einem Display dargestellt werden.

9. Verfahren nach einem der vorhergehenden Ansprüche, **dadurch gekennzeichnet, dass** der Roboter (1) eine Umgebungskarte und/oder einen Kartenteilbereich (4), welche eine geplante Fortbewegungsroute des Roboters (1) zumindest teilweise beinhalten, zeitlich im Voraus von der externen Speichereinrichtung (3) empfängt.

10. Computerprogrammprodukt zur Installation auf einer Recheneinrichtung eines sich selbsttätig fortbewegenden Roboters (1), wobei das Computerprogrammprodukt ausgebildet ist, den Roboter (1) zu veranlassen, ein Verfahren nach einem der Ansprüche 1 bis 9 durchzuführen, insbesondere den Roboter (1) zu veranlassen, eine für eine Navigation des Roboters (1) derzeit nicht benötigte Umgebungskarte und/oder einen derzeit nicht benötigten Kartenteilbereich (4) einer Umgebungskarte zu erkennen und an eine externe Speichereinrichtung (3) zu übermitteln.

## Claims

1. A method for operating a self-traveling robot (1), wherein an environment map of an environment (2) of the robot (1) is generated based on measuring data recorded within the environment (2), wherein a position of the robot (1) within the environment (2) is estimated, and wherein the robot (1) travels within the environment (2) based on the environment map and its known position, **characterized in that** an environment map, which is currently not needed for the navigation of the robot (1), is detected and transmitted to an external memory unit (3).

2. A method for operating a self-traveling robot (1), wherein an environment map of an environment (2) of the robot (1) is generated based on measuring data recorded within the environment (2), wherein a position of the robot (1) within the environment (2) is estimated, and wherein the robot (1) travels within the environment (2) based on the environment map and its known position, **characterized in that** a map section (4) of the environment map, which is currently not needed for the navigation of the robot (1), is detected, extracted from the environment map and transmitted to an external memory unit (3).

3. The method according to claim 1 or 2, **characterized in that** an environment map, which is currently needed for the navigation, and/or a map section (5), which is currently needed for the navigation of the robot (1), is stored in a local memory (6) of the robot (1).

4. The method according to one of the preceding claims, **characterized in that** the unneeded environment map and/or the unneeded map section (4) is transmitted to an external local server and/or an Internet server and stored thereon.

5. The method according to one of the preceding claims, **characterized in that** multiple robots (1) transmit environment maps and/or map sections (4) to the external memory unit (3), wherein a first robot (1) can access an environment map and/or a map section (4) transmitted by a second robot (1).

6. The method according to one of the preceding claims, **characterized in that** the robot (1) receives upon a change of its position, which is related to a previously unneeded environment map and/or a previously unneeded map section (4) of an environment map, this environment map and/or this map section (4) from the external memory unit (3).

7. The method according to one of the preceding claims, **characterized in that** a newly generated environment map and/or a newly generated map section (5) is stored within a local memory (6) of the robot (1) while it is generated.

8. The method according to one of the preceding claims, **characterized in that** environment maps and/or map sections (4, 5) stored in the robot (1) and/or the external memory unit (3) are illustrated on a display.

9. The method according to one of the preceding claims, **characterized in that** the robot (1) receives an environment map and/or a map section (4), which contains at least part of a planned traveling route of the robot (1), from the external memory unit (3) in advance.

10. A computer program product for installation on a computer unit of a self-traveling robot (1), wherein the computer program product is designed for prompting the robot (1) to carry out a method according to one of claims 1-9, particularly for prompting the robot (1) to detect and transmit an environment map, which is currently not needed for the navigation of the robot (1), and/or a map section (4) of an environment map, which is currently not needed, to an external memory unit (3).

## Revendications

1. Procédé pour faire fonctionner un robot (1) se déplaçant automatiquement, dans lequel une carte d'environnement d'un environnement (2) du robot (1) est établie sur la base de données de mesure enregistrées dans l'environnement (2), dans lequel une position propre du robot (1) dans l'environnement (2) est estimée, et dans lequel le robot (1) se déplace sur la base de la carte d'environnement et de la position propre connue dans l'environnement (2), **caractérisé en ce qu'**une carte d'environnement qui n'est pas nécessaire actuellement pour une navigation du robot (1) est reconnue et transmise à un dispositif de stockage externe (3).

2. Procédé pour faire fonctionner un robot (1) se déplaçant automatiquement, dans lequel une carte d'environnement d'un environnement (2) du robot (1) est établie sur la base de données de mesure enregistrées dans l'environnement (2), dans lequel une position propre du robot (1) dans l'environnement (2) est estimée, et dans lequel le robot (1) se déplace dans l'environnement (2) sur la base de la carte d'environnement et de la position propre connue dans l'environnement (2), **caractérisé en ce qu'**une sous-zone de carte (4) de la carte d'environnement qui n'est pas actuellement nécessaire pour une navigation du robot (1) est reconnue, extraite de la carte d'environnement et transmise à un dispositif de stockage externe (3).

3. Procédé selon la revendication 1 ou 2, **caractérisé en ce qu'**une carte d'environnement actuellement nécessaire pour une navigation et/ou une sous-zone de carte (5) actuellement nécessaire pour une navigation du robot (1) est stockée dans une mémoire locale (6) du robot (1).

4. Procédé selon l'une des revendications précédentes, **caractérisé en ce que** la carte d'environnement qui n'est pas nécessaire et/ou la sous-zone de carte (4) qui n'est pas nécessaire est transmise à un serveur local externe et/ou à un serveur Internet et y est stockée.

5. Procédé selon l'une des revendications précédentes, **caractérisé en ce que** plusieurs robots (1) transmettent des cartes d'environnement et/ou des sous-zones de carte(s) (4) au dispositif de stockage externe (3), dans lequel un premier robot (1) peut accéder à une carte d'environnement et/ou une sous-zone de carte (4) transmise par un deuxième robot (1).

6. Procédé selon l'une des revendications précédentes, **caractérisé en ce que** dans le cas d'un changement de la propre position qui concerne une carte d'environnement qui n'était pas nécessaire précédemment et/ou une sous-zone de carte (4) d'une carte d'environnement qui n'était pas nécessaire précédemment, le robot (1) reçoit cette carte d'environnement et/ou cette sous-zone de carte (4) du dispositif de stockage externe (3).

7. Procédé selon l'une des revendications précédentes, **caractérisé en ce qu'**une carte d'environnement nouvellement établie et/ou une sous-zone de carte nouvellement établie (5) est stockée dans une mémoire locale (6) du robot (1) pendant l'établissement.

8. Procédé selon l'une des revendications précédentes, **caractérisé en ce que** des cartes d'environnement et/ou des sous-zones de carte(s) (4, 5) stockées dans le robot (1) et/ou le dispositif de stockage externe (3) sont affichées sur un écran.

9. Procédé selon l'une des revendications précédentes, **caractérisé en ce que** le robot (1) reçoit du dispositif de stockage externe (3) à l'avance dans le temps une carte d'environnement et/ou une sous-zone de carte (4) qui contient au moins partiellement un itinéraire de déplacement planifié du robot (1).

10. Produit de programme d'ordinateur destiné à être installé sur un dispositif informatique d'un robot (1) se déplaçant automatiquement, le produit de programme d'ordinateur étant conçu pour amener le robot (1) à mettre en œuvre un procédé selon l'une des revendications 1 à 9, en particulier pour amener le robot (1) à reconnaître une carte d'environnement qui n'est pas actuellement nécessaire pour une navigation du robot (1) et/ou une sous-zone de carte (4) d'une carte d'environnement qui n'est pas actuellement nécessaire et la transmettre à un dispositif de stockage externe (3).
